# EUROPÄISCHE PATENTANMELDUNG

(11) **EP 4 108 370 A1**
(43) Veröffentlichungstag der Anmeldung: **28.12.2022**
(21) Anmeldenummer: 21180832.4
(22) Anmeldetag: 22.06.2021
(51) Int. Cl.: B23K 1/002, B23K 1/06, B28D 1/14, B23B 51/00, B23K 101/20

(54) **FLÜGEVERFAHREN UND HAMMERBOHRWERKZEUG**

(71) Anmelder: Hilti Aktiengesellschaft, 9494 Schaan (LI)
(72) Erfinder: Stroissnigg, Horst, 88326 Aulendorf (DE); Geirhos, Johannes, 86862 Lamerdingen (DE); Allaart, Jan, 9487 Gamprin (LI)
(74) Vertreter: Hilti Aktiengesellschaft Corporate Intellectual Property

(57) **Zusammenfassung**

Die Erfindung betrifft ein Fügeverfahren (100) zum Fügen zweier Bauteile, insbesondere ein Werkzeugkopf (16) und ein Werkzeugschaft (12), zur Herstellung eines Werkzeugs (10), wobei ein formloser Stoff verwendet wird. Sie ist dadurch gekennzeichnet, dass der formlose Stoff während des Fügens einer Vibration ausgesetzt wird. Die Erfindung betrifft des Weiteren Werkzeuge (10). Die erfindungsgemäß hergestellten Werkzeuge (10) weisen bei niedrigen Herstellungskosten hohe Bruchfestigkeiten auf.

## Beschreibung

Die Erfindung geht aus von einem Fügeverfahren zum Fügen zweier Bauteile, insbesondere ein Werkzeugkopf und ein Werkzeugschaft, zur Herstellung eines Werkzeugs, wobei ein formloser Stoff verwendet wird. Des Weiteren betrifft die Erfindung Werkzeuge.

Werkzeuge, insbesondere zur Bearbeitung von Gestein, beispielsweise Beton, sollten möglichst robust sein. Bei derartigen Werkzeugen, insbesondere wenn sie durch Fügen von wenigstens zwei Bauteilen hergestellt werden, stellt die Qualität von Fügeverbindungen, insbesondere zwischen den zwei Bauteilen, oftmals einen kritischen Faktor im Hinblick auf die Haltbarkeit der Werkzeuge dar.

Aufgabe der vorliegenden Erfindung ist es daher, ein Fügeverfahren zur Herstellung besonders bruchfester Werkzeuge, bei denen zum Fügen ein formloser Stoff verwendet wird, sowie besonders bruchfeste Werkzeuge, bei denen ein Werkzeugkopf an einen Werkzeugschaft gefügt sind, anzubieten.

Gelöst wird die Aufgabe durch ein **Fügeverfahren zum Fügen zweier Bauteile,** wobei ein formloser Stoff verwendet wird, wobei der formlose Stoff während des Fügens einer Vibration ausgesetzt wird. Besonders bevorzugt kann dieses erfindungsgemäße Fügeverfahren zum Fügen eines Werkzeugkopfes an einem Werkzeugschaft zur Herstellung eines Werkzeugs verwendet werden.

Der Erfindung liegt somit die Erkenntnis zugrunde, dass oftmals nach dem Fügen der zwei Bauteile im formlosen Stoff Lunker, also Poren, ausgebildet sind. Die Bildung von Lunkern verschlechtert die Qualität der Fügeverbindung. Insbesondere kann die Festigkeit der Fügeverbindung durch die gebildeten Lunker degradiert sein.

Eigene Untersuchungen haben nun den überraschenden Effekt aufgezeigt, dass durch eine Vibration des formlosen Stoffes, die Dichte und / oder die Häufigkeit von Lunkern im Bereich der zu bildenden Fügeverbindung, also insbesondere im formlosen Stoff und / oder in einem Grenzbereich zwischen den beiden zu fügenden Bauteilen, reduziert werden kann. Dies wiederum ermöglicht es, die Bruchfestigkeit der gebildeten Fügeverbindung zu verbessern.

Das Fügeverfahren kann beispielsweise Löten und / oder Kleben umfassen.

Besonders bevorzugt können ein Werkzeugkopf und ein Werkzeugschaft eines Werkzeugs aneinandergefügt werden. Das Werkzeug kann ein Werkzeug für eine Elektrowerkzeugmaschine sein. Es kann insbesondere ein Werkzeug zur Bearbeitung von Gestein, insbesondere Beton, sein. Beispielsweise kann das Werkzeug ein Bohrwerkzeug und / oder ein Meißelwerkzeug sein. Die Elektrowerkzeugmaschine kann als Meißelmaschine und / oder als Hammerbohrmaschine ausgebildet sein. Sie kann tragbar sein. Sie kann manuell bedienbar sein. Alternativ oder ergänzend kann sie als mobiler Bauroboter ausgebildet sein.

Bei einer Klasse von Fügeverfahren können die Bauteile mit einem Lot aneinander gelötet werden. Das Lot kann dann dem formlosen Stoff entsprechen. Das Lot kann ein Hartlot sein. Es kann insbesondere ein Silber-Hartlot sein. Ein Silber-Hartlot kann insbesondere wenigstens 10 Gewichtsprozent, beispielsweise zwischen 25 und 30 Gewichtsprozent, Silber enthalten.

Alternativ kann das verwendete Lot auch ein silberarmes Hartlot sein. Unter einem silberarmen Lot kann ein Lot verstanden werden, dass weniger als 10 Gewichtsprozent Silber enthält. Durch die verfahrensgemäß erzielte Festigkeitssteigerung können derartige silberarme Hartlote oftmals sonst erforderliche Silber-Hartlote ersetzen, sodass sich Herstellkosten senken lassen.

Es kann sich um eine niederfrequente Vibration handeln. Die Vibration kann beispielsweise eine Frequenz von weniger als 10 kHz aufweisen. Dazu kann die Frequenz weniger als 1 kHz, insbesondere weniger als 100 Hz, betragen. So konnten beispielsweise erfolgreiche Erprobungen mit Vibrationen durchgeführt werden, deren Frequenz in einem Frequenzbereich zwischen 30 und 50 Hz lag. Die Vibration kann mehr als eine Frequenz, insbesondere ein Frequenzband, umfassen. Als Frequenz bei einer ein Frequenzband umfassenden Vibration kann die Frequenz mit einer größten Amplitude gewertet werden.

Die Vibration kann durch eine Vibrationsvorrichtung erzeugt werden. Die Vibrationsvorrichtung kann ein Kugelvibrator sein. Die Vibrationsvorrichtung kann dazu pneumatisch antreibbar sein. Bevorzugt kann die Vibrationsvorrichtung an einem Spannfutter, in dem das Werkzeug zum Fügen aufgenommen ist, angeordnet sein und / oder auf ein solches Spannfutter wirken. Über das Spannfutter kann dann die Vibration auf das Werkzeug, insbesondere während des Fügens, übertragen werden.

Besonders bevorzugt kann während einer Aufheizphase des Fügens das Werkzeug der Vibration ausgesetzt werden. Während einer nachfolgenden Abkühlphase kann die Vibration dann wieder abgeschaltet sein.

Die Dauer der Vibration kann sich nach einer Größe des Werkzeugs, beispielsweise nach einem Durchmesser des Werkzeugs, richten. Für ein übliches Bohrwerkzeug kann die Dauer der Vibration beispielsweise im Bereich zwischen 10 und 40 Sekunden liegen.

Denkbar ist insbesondere, dass die zwei zu fügenden Bauteile ein Werkzeugkopf und ein Werkzeugschaft eines Werkzeugs, insbesondere für eine mobile Elektrowerkzeugmaschine, sind. Besonders bevorzugt kann es sich um einen Werkzeug zur Bearbeitung von Gestein wie beispielsweise ein Meißel- und/oder Hammerbohrwerkzeug handeln.

Das Werkzeug kann einen Durchmesser von 18-55 mm aufweisen. Derartige, verhältnismäßig große Werkzeuge werden üblicherweise besonders hohen Belastungen ausgesetzt, sodass sich bei derartigen Werkzeugen das erfindungsgemäße Fügeverfahren als besonders wertvoll erweist.

In den Rahmen der Erfindung fällt des Weiteren ein **Werkzeug** mit einem Werkzeugkopf und einem an den Werkzeugkopf gefügten Werkzeugschaft, das nach dem erfindungsgemäßen Verfahren hergestellt ist.

Das Werkzeug kann mit einem Lot, insbesondere mit einem silberarmen Hartlot, gelötet sein. Das silberarme Hartlot kann beispielsweise ein Kupfer-Mangan-Nickel-(CuMnNi)-Lot sein. Beispielsweise kann es ein Lot wie üblich als "B-Cu86MnNi 970/990" bezeichnet sein. Derartige Lote konnten bislang aufgrund einer mangelnden Festigkeit nicht oder nur sehr eingeschränkt für stark beanspruchte Werkzeuge wie beispielsweise Gesteinsbohrer eingesetzt werden. Dieses Hemmnis lässt sich nun auf überraschende Weise durch die mit dem erfindungsgemäßen Verfahren einhergehende Steigerung der Festigkeit der Fügeverbindung überwinden. Ein solches Werkzeug kann daher bei vergleichbarer oder sogar besserer

Bruchfestigkeit zu deutlich günstigeren Herstellkosten hergestellt werden.

Auch fällt in den Rahmen der Erfindung ein **Werkzeug,** das zur Nutzung mit einer mobilen Elektrowerkzeugmaschine geeignet, insbesondere eingerichtet, ist, mit einem Werkzeugkopf und einem an den Werkzeugkopf mit einem Lot gelöteten Werkzeugschaft, wobei das Lot in einer das Lot, den Werkzeugkopf und den Werkzeugschaft zumindest abschnittsweise erfassenden Schnittebene einen Flächenanteil von Lunkern von höchstens 15 %, besonders bevorzugt von höchstens 5%, aufweist. Das Werkzeug kann somit lediglich einen besonders geringen Anteil an Lunkern, insbesondere im Bereich des Lotes, aufweisen.

Das Lot kann eine oder mehrere der vorangehend für ein Lot genannten Eigenschaften aufweisen. Es kann insbesondere ein silberarmes Lot, insbesondere ein CuMnNi-Lot, sein oder ein solches umfassen.

Das Werkzeug kann zur Bearbeitung von Gestein, insbesondere Beton, ausgebildet sein, sodass sich eine hohe Robustheit besonders vorteilhaft auswirken kann. Der Beton kann armiert sein.

Das Werkzeug kann beispielsweise ein Schlagwerkzeug, insbesondere ein Bohrwerkzeug und / oder ein Meißelwerkzeug, sein oder umfassen.

Allgemein können die Werkzeuge ein oder mehrere der im Zusammenhang mit dem Verfahren genannten Eigenschaften für Werkzeuge aufweisen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- **Fig. 1**: ein Werkzeug,
- **Fig. 2**: eine Bearbeitungsstation,
- **Fig. 3** und **Fig. 4**: Schnittansichten von Werkzeugen mit Silber-Lot,
- **Fig. 5** und **Fig. 6**: Schnittansichten von Werkzeugen mit CuMnNi-Lot und
- **Fig. 7**: ein Fügeverfahren.

In der nachfolgenden Beschreibung der Figuren werden zur Erleichterung des Verständnisses der Erfindung für gleiche oder sich funktional entsprechende Elemente jeweils die gleichen Bezugszeichen verwendet.

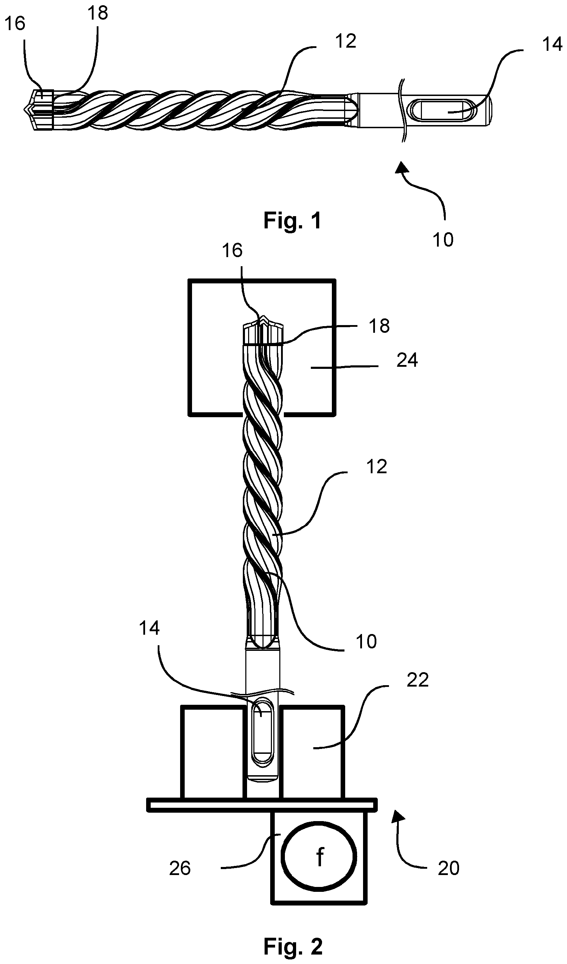

**Fig. 1** zeigt ein Werkzeug **10**.

Das Werkzeug 10 ist als Schlagwerkzeug ausgebildet. Insbesondere ist es ein Hammerbohrwerkzeug. Es ist ein Gesteinsbohrer, insbesondere zum Bohren in nichtarmierten und / oder armierten Beton.

Das Werkzeug 10 weist einen Werkzeugschaft **12** auf, an dem ein Einsteckende **14** einenends angearbeitet ist.

Anderenends des Werkzeugschafts 12 ist ein Werkzeugkopf **16** gefügt, insbesondere gelötet.

Dazu weist das Werkzeug 10 zwischen seinem Werkzeugschaft 12 und dem Werkzeugkopf 16 ein Lot **18** auf. Das Lot 18 ist, insbesondere während eines Fügevorgangs, ein formloser Stoff.

Das Lot 18 ist derart gewählt, dass es während des Fügevorgangs, in diesem Ausführungsbeispiel also während eines Lötvorgangs, des Werkzeugkopfes 16 an den Werkzeugschaft 12 bis mindestens zu einer Liquidustemperatur erwärmbar und damit zumindest teilweise verflüssigbar ist.

**Fig. 2** zeigt eine Bearbeitungsstation **20** zum Fügen des Werkzeugkopfes 16 an den Werkzeugschaft 12 und somit zur Herstellung des Werkzeugs 10.

Die Bearbeitungsstation 20 weist eine Spannvorrichtung **22** auf, in die das Werkzeug 10, insbesondere der Werkzeugschaft 12, beispielsweise mit seinem Einsteckende 14, eingespannt ist.

Anderenends ist das Werkzeug 10 in einer Fügevorrichtung **24** der Bearbeitungsstation 20 angeordnet.

In der Fügevorrichtung 24 befindet sich dazu der Werkzeugkopf 16. Zwischen dem Werkzeugkopf 16 und dem Werkzeugschaft 12 ist Lot 18, beispielsweise in Form einer Lottablette, eingebracht.

In diesem Ausführungsbeispiel ist die Fügevorrichtung 24 als Lötvorrichtung ausgebildet. Dazu ist die Fügevorrichtung 24 ausgebildet, das Lot 18 zu erwärmen und dadurch den Werkzeugkopf 16 an den Werkzeugschaft 12 zu löten. Dazu kann die Fügevorrichtung 24 ein induktives Heizsystem aufweisen.

Die Bearbeitungsstation 20 weist ferner eine Vibrationsvorrichtung **26** auf. Die Vibrationsvorrichtung 26 ist eingerichtet, eine Vibration innerhalb der Bearbeitungsstation 20 zu erzeugen. Dazu weist sie einen Kugelvibrator auf. Die Vibrationsvorrichtung 26 ist insbesondere eingerichtet, das Werkzeug 10 zu geeigneten Zeiten in Vibration zu versetzen. Dazu ist die Bearbeitungsstation 20 derart eingerichtet, dass von der Vibrationsvorrichtung 26 erzeugte Vibrationen über die Spannvorrichtung 22 auf das Werkzeug 10 übertragbar sind.

Die von der Vibrationsvorrichtung 26 erzeugten Vibrationen weisen ein Frequenzband **f** auf. Aufgrund der als Kugelvibrator ausgebildeten Vibrationsvorrichtung 26 verlaufen die Vibrationen vorrangig entlang einer Hauptrichtung, wobei jedoch auch Vibrationen in einer zu dieser Hauptrichtung senkrechten Ebene möglich sind. Denkbar ist, die Vibrationsvorrichtung 26 derart an der Bearbeitungsstation 20 anzuordnen, dass zumindest ein Großteil der Vibrationen, insbesondere Vibrationen entlang der Hauptrichtung, auf das Werkzeug 10 übertragen werden.

Das von der Vibrationsvorrichtung 26 erzeugte Frequenzband f kann sich, insbesondere zum überwiegenden Teil, im Bereich zwischen 20 und 35 Hz bewegen. Seine Frequenz kann beispielsweise zwischen 25 und 30 Hz liegen.

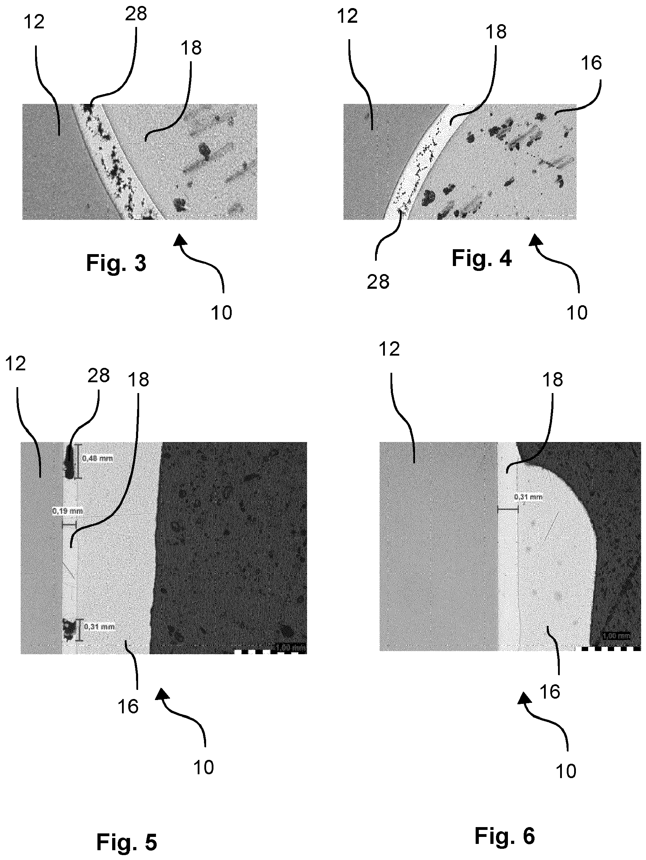

**Fig. 3** bis **Fig. 6** zeigen Schnittdarstellungen von Werkzeugen 10 von Schnitten im Bereich des Lotes 18 nach Verlöten des Werkzeugschafts 12 mit dem Werkzeugkopf 16.

Die Schnitte sind derart gewählt, dass die jeweils gebildeten Schnittebenen das Lot 18, den Werkzeugkopf 16 und den Werkzeugschaft 12 zumindest abschnittsweise erfassen.

Fig. 3 und Fig. 4 zeigen Fälle, bei denen als Lot ein Silberlot verwendet worden ist.

Fig. 5 und Fig. 6 zeigen Fälle, bei denen ein CuMnNi-Lot, insbesondere B-Cu86MnNi 970/990, verwendet worden ist.

Fig. 3 und Fig. 5, also die jeweils linksseitigen Figuren, zeigen Fälle, bei denen Werkzeuge 10 ohne Vibration verlötet worden sind.

Fig. 4 und Fig. 6, also die rechtsseitig dargestellten Figuren, zeigen Fälle, bei denen Werkzeuge 10 unter Vibration verlötet worden sind.

Innerhalb des jeweiligen Lotes 18 sind Lunker **28** als besonders dunkle Bereiche erkennbar. Aufgrund der zum Teil großen Vielzahl von Lunkern 28 sind in Fig. 3 bis Fig. 6 lediglich einzelne der Lunker 28 beispielhaft mit Bezugszeichen 28 versehen.

In den Fällen gemäß Fig. 3 und Fig. 5, in denen also ohne Vibration verlötet worden ist, ist ein besonders großer Anteil an Lunkern 28 innerhalb des jeweiligen Lotes 18 erkennbar.

Bei Verwendung des Silber-Lotes als Lot 18 zeigt sich eine besonders große Häufigkeit mittelgroßer Lunker 28, während im Falle des CuMnNi-Lotes weniger häufige, jedoch vergleichsweise große, insbesondere voluminöse, Lunker 28 erkennbar sind.

Im Gegensatz dazu ergeben sich in den Fällen, in denen mit Vibration verlötet worden ist, weniger häufige und / oder kleinere Lunker 28.

So ergibt sich, wie aus Fig. 4 ersichtlich, bei Verwendung eines Silber-Lotes als Lot 18 eine deutlich reduzierte Häufigkeit von Lunkern 28. Die Lunker 28 sind zudem im Mittel kleiner als bei dem Werkzeug 10 gemäß Fig. 3.

Im Falle des CuMnNi-Lotes als Lot 18 gemäß Fig. 6 konnten Lunker 28, zumindest nahezu, vollständig durch die Vibration vermieden werden.

In der nachfolgenden Tabelle 1 sind die sich aus den Schnittebenen gemäß Fig. 3 bis Fig. 6 ergebenden Flächenanteile der Lunker 28 im Lot 18 abgeschätzt und zusammengefasst:

**Tabelle 1. Flächenanteile der Lunker in den Schnittebenen gemäß Fig. 3 bis Fig. 6.**

| | Silberlot | CuMnNi-Lot |
|---|---|---|
| | | |
| keine Vibration | >20 %, insbesondere ca. 25 % | >20 %, insbesondere ca. 22 % |
| mit Vibration | < 15 %, insbesondere ca. 10-12 % | < 15 %, insbesondere < 5 %, ganz insbesondere im Wesentlichen Lunker-frei |

Ein Vergleich der Werkzeuge 10 gemäß Fig. 5 und Fig. 6, also der Werkzeuge 10 mit CuMnNi-Lot als Lot 18, ergab ferner eine um ca. den Faktor 5 verbesserte Bruchfestigkeit des Werkzeugs 10, wenn es unter Vibration verlötet worden sind, im Vergleich zu dem Werkzeug 10 bei Verlötung ohne Vibration.

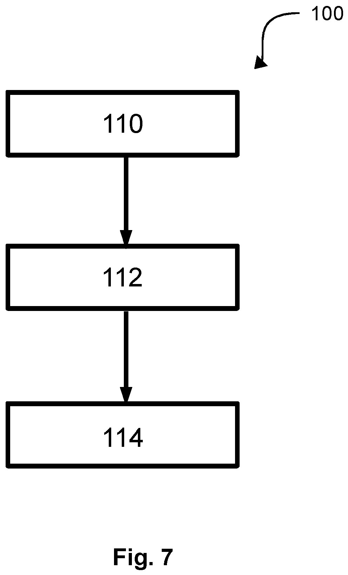

**Fig. 7** beschreibt ein Fügeverfahren **100** zum Fügen zweier Bauteile, wobei ein formloser Stoff verwendet wird.

Das Fügeverfahren 100 wird im Folgenden anhand der Herstellung eines Werkzeugs 10 beschrieben, bei dem als zu fügende Bauteile ein Werkzeugkopf 16 an einen Werkzeugschaft 12 zu fügen sind. Im Beispiel handelt es sich um ein Lötverfahren, bei dem als formloser Stoff ein Lot 18 verwendet wird. Zur Realisierung des Beispiels kann eine Bearbeitungsstation nach Art der vorangehend beschriebenen Bearbeitungsstation 20 verwendet werden.

Das Fügeverfahren 100 sieht vor, dass der formlose Stoff während des Fügens einer Vibration ausgesetzt wird.

Im Folgenden werden einzelne Schritte des Fügeverfahrens 100 anhand dieses Beispiels geschildert:
Während eines Aufheizschritts **110** wird das Lot 18, beispielsweise mittels einer Fügevorrichtung 24, bis zu dessen Liquidustemperatur aufgeheizt, sodass das Lot 18 schmilzt.

Währenddessen wird das Lot 18 einer Vibration ausgesetzt. Dies kann beispielsweise mithilfe einer Vibrationsvorrichtung nach Art der vorangehend beschriebenen Vibrationsvorrichtung 26 erfolgen. Insbesondere kann sich das Lot 18, beispielsweise in Form einer Lottablette, zwischen den beiden zu fügenden Bauteilen, hier also dem Werkzeugkopf 16 und dem Werkzeugschaft 12, befinden. Dann kann die Vibrationsvorrichtung 26 direkt und / oder indirekt auf den Werkzeugschaft 12 und / oder den Werkzeugkopf 16 einwirken und diese zur Vibration bringen, sodass dann auch das dazwischen befindliche Lot 18 in Vibrationen versetzt wird.

Die Dauer der Vibration kann sich nach Eigenschaften des Werkzeugs 10 richten. Beispielsweise kann die Vibrationsdauer in Abhängigkeit von einem Durchmesser des Werkzeugs 10 gewählt sein. Auch die Dauer des Aufheizens kann sich nach dieser oder einer anderen Eigenschaft des Werkzeugs 10 richten. Bei einem Werkzeug 10, das einen Durchmesser im Bereich zwischen 18 und 55 mm aufweist, kann die Aufheizzeit zum Beispiel zwischen 10 und 40 Sekunden betragen.

Nach Abschluss der Aufheizphase werden in einem nachfolgenden Fügeschritt **112** die beiden miteinander zu fügenden Bauteile, hier also der Werkzeugkopf 16 und der Werkzeugschaft 12, einander angenähert, sodass sie zur Fügung, hier also zur Verlötung, in das aufgeschmolzene Lot 18 eintauchen. Dieses Eintauchen kann bei entsprechend angeordneten Bauteilen und dem Lot 18 auch schwerkraftgetrieben erfolgen. Während des Fügeschritts 112 wird das Lot 18 vorzugsweise weiterhin der Vibration ausgesetzt.

In einem nachfolgenden Abkühlschritt **114** wird das Lot 18, beispielsweise durch Abschalten der Fügevorrichtung 24, nicht mehr aufgeheizt, sodass es abkühlt und sich wieder verfestigt. Es kann alternativ oder ergänzend auch aktiv gekühlt werden. Während dieses Abkühlschritts 114 werden keine Vibrationen mehr erzeugt, beispielsweise durch Abschalten der Vibrationsvorrichtung 26.

Nach hinreichendem Abkühlen sind die beiden zu fügenden Bauteile gefügt, sodass das Werkzeug 10 entnommen und verwendet werden kann.

## Patentansprüche

1. **Fügeverfahren** (100) zum Fügen zweier Bauteile, insbesondere ein Werkzeugkopf (16) und ein Werkzeugschaft (12), zur Herstellung eines Werkzeugs (10), wobei ein formloser Stoff verwendet wird,
**dadurch gekennzeichnet,**
**dass** der formlose Stoff während des Fügens einer Vibration ausgesetzt wird.

2. Fügeverfahren nach dem vorhergehenden Anspruch, **dadurch gekennzeichnet, dass** die Bauteile mit einem Lot (18) als formlosem Stoff aneinander gelötet werden.

3. Fügeverfahren nach einem der vorhergehenden Ansprüche, **dadurch gekennzeichnet, dass** die Vibration eine Frequenz von weniger als 10 kHz, bevorzugt von weniger als 100 Hz, aufweist.

4. Fügeverfahren nach einem der vorhergehenden Ansprüche, **dadurch gekennzeichnet, dass** die zwei zu fügenden Bauteile ein Werkzeugkopf (16) und ein Werkzeugschaft (12) eines Werkzeugs (10) für eine mobile Elektrowerkzeugmaschine sind.

5. **Werkzeug** (10) mit einem Werkzeugkopf (16) und einem an den Werkzeugkopf (16) gefügten Werkzeugschaft (12), hergestellt nach dem Fügeverfahren (100) gemäß einem der vorhergehenden Ansprüche.

6. Werkzeug nach dem vorhergehenden Anspruch, **dadurch gekennzeichnet, dass** das Werkzeug (10) mit einem Lot (18), insbesondere mit einem silberarmen Hartlot, gelötet ist.

7. **Werkzeug** (10) für eine mobile Elektrowerkzeugmaschine, mit einem Werkzeugkopf (16) und einem an den Werkzeugkopf (16) mit einem Lot (18) gelöteten Werkzeugschaft (12), wobei das Lot (18) in einer das Lot (18), den Werkzeugkopf (16) und den Werkzeugschaft (12) zumindest abschnittsweise erfassenden Schnittebene einen Flächenanteil von Lunkern (28) von höchstens 15 %, besonders bevorzugt von höchstens 5%, aufweist.

8. Werkzeug nach dem vorhergehenden Anspruch, **dadurch gekennzeichnet, dass** das Lot (18) ein silberarmes Lot (18), insbesondere ein CuMnNi-Lot, ist oder ein solches umfasst.

9. Werkzeug nach einem der Ansprüche 5 bis 8, **dadurch gekennzeichnet, dass** das Werkzeug (10) zur Bearbeitung von Gestein, insbesondere Beton, ausgebildet ist.

10. Werkzeug nach einem der Ansprüche 5 bis 9, **dadurch gekennzeichnet, dass** das Werkzeug (10) ein Schlagwerkzeug, insbesondere ein Bohrwerkzeug und / oder ein Meißelwerkzeug, ist oder umfasst.
